(19) Europäisches Patentamt
European Patent Office
Office européen des brevets

(11) Veröffentlichungsnummer: **0 098 242**
**B1**

(12) **EUROPÄISCHE PATENTSCHRIFT**

(45) Veröffentlichungstag der Patentschrift: **22.07.87**

(51) Int. Cl.⁴: **C 09 B 57/06**, C 08 K 5/24

(21) Anmeldenummer: **83810269.7**

(22) Anmeldetag: **20.06.83**

(54) **Naphthostyril-Metallkomplexe, Verfahren zu deren Herstellung und damit pigmentiertes hochmolekulares organisches Material.**

(30) Priorität: **24.06.82 CH 3888/82**

(43) Veröffentlichungstag der Anmeldung: **11.01.84 Patentblatt 84/2**

(45) Bekanntmachung des Hinweises auf die Patenterteilung: **22.07.87 Patentblatt 87/30**

(84) Benannte Vertragsstaaten: **CH DE FR GB IT LI**

(56) Entgegenhaltungen:
**EP-A-0 037 372**
**DE-A-1 804 133**
**DE-A-2 415 055**
**FR-A-2 195 664**
**US-A-4 132 708**

(73) Patentinhaber: **CIBA- GEIGY AG, Klybeckstrasse 141, CH- 4002 Basel (CH)**

(72) Erfinder: **Frey, Christoph, Dr., Schürhofweg 8, CH- 4147 Aesch (CH)**
Erfinder: **Felix, Franz, Dr., Im Steinacker 3, CH- 4142 Münchenstein (CH)**

**EP 0 098 242 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft 1:2-Nickel- oder 1:2-Kupferkomplexe eines Naphthostyrils der Formel

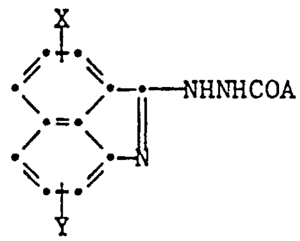

(I),

oder von Tautomeren davon, worin A einen carbocyclischen oder heterocyclischen aromatischen Rest, X und Y unabhängig voneinander Wasserstoff, Halogen, Nitro, $C_1$-$C_6$-Alkyl, $C_1$-$C_6$-Alkoxy oder Alkylmercapto, $C_2$-$C_7$-Alkoxycarbonyl, Carbamoyl, $C_2$-$C_7$-Alkylcarbamoyl, Arylcarbamoyl, $C_2$-$C_6$-Alkanoylamino oder Aroylamino bedeuten.

Bei Formel (I), sowie auch bei den nachstehend aufgeführten Formeln handelt es sich um eine der möglichen tautomeren oder mesomeren Strukturen.

Als carbocyclischer aromatischer Rest steht A beispielsweise für einen in α- oder insbesondere in β-Stellung an die CO-Gruppe gebundenen Naphthylrest, einen in β-Stellung an die CO-Gruppe gebundenen Anthrachinonrest, vorzugsweise aber einen gegebenenfalls durch Chlor, Brom, Fluor, Methyl-, Phenyl-, $C_1$-$C_6$-Alkoxy-, Phenoxy-, $C_2$-$C_7$-Alkoxycarbonyl-, Carbamoyl-, $C_2$-$C_7$-Alkylcarbamoyl-, $C_2$-$C_{13}$-Dialkylamino-oder Phenylcarbamoylgruppen substituierten Phenylrest.

Als heterocyclische aromatische Reste A seien genannt die Thiophen-, Imidazol-, Triazol-, Pyrazol-, Pyridin-, Chinolin-, Isochinolin-, Cumarin- oder Imidazolreste. Bevorzugt sind der 2-Thienyl- und/oder 3- oder 4-Pyridylrest.

X und Y bedeuten vorzugsweise Fluor, Brom oder insbesondere Chlor, Methyl oder Methoxy oder Äthoxy, Methyl- oder Äthylmercapto, Methoxycarbonyl, Aethoxycarbonyl, Carbamoyl, Methyl- oder Äthylcarbamoyl, Phenylcarbamoyl, Acetylamino oder Benzoylamino. Besonders bevorzugt bedeuten X und Y H-Atome.

Die Metallkomplexe der Verbindungen der Formel (I) erhält man durch Behandeln eines Naphthostyrils der Formel

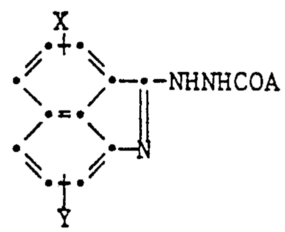

(I),

worin A, X und Y die oben angegebene Bedeutung haben, mit nickel- oder kupferabgebenden Mitteln. Als nickel- oder kupferabgebende Mittel eignen sich vorzugsweise die Formiate, Stearate, Acetylacetonate, vor allem aber die Acetate dieser Metalle.

Die Metallisierung findet zweckmässig in einem organischen Lösungsmittel statt. Als solche eignen sich insbesondere Aethanol, Butanol, Essigsäure, Dioxan. Dimethylformamid, Pyridin, Alkylenglykolmonomethyloder -äthyläther, oder N-Methylpyrrolidin. Als Lösungsmittel kann auch Wasser, gegebenenfalls im Gemisch mit einem der erwähnten organischen Lösungsmittel, verwendet werden.

Die Metallisierung erfolgt bevorzugt bei erhöhter Temperatur, insbesondere zwischen 50°C, vor allem 80°C, und dem Siedepunkt des verwendeten Lösungsmittels. Die erhaltenen Metallkomplexe lassen sich leicht durch Filtration isolieren. Allfällige Verunreinigungen lassen sich durch Auswaschen entfernen.

Die Naphthostyrile der Formel (I) erhält man durch Kondensation einer Verbindung der Formel

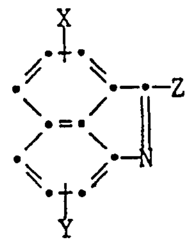 (II) oder 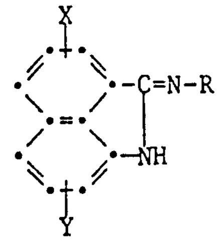 (III),

worin Z einen reaktiven Rest, insbesondere eine Alkylmercaptogruppe, und R einen Phenylrest bedeuten, und X und Y die angegebene Bedeutung haben, mit einem Hydrazid der Formel

$H_2NNHCOA$ (IV),

worin A die angegebene Bedeutung hat. Diese Kondensation findet zweckmässig in einem der oben erwähnten Lösungsmittel bei erhöhter Temperatur, insbesondere zwischen 80°C und dem Siedepunkt des Lösungsmittels, statt.

Die Verbindungen der Formel (II) erhält man nach bekanntem Verfahren durch Umsetzen eines Naphtholactams der Formel

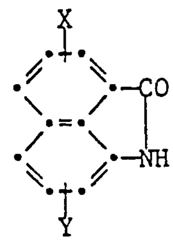 (V)

beispielsweise mit Phosphorpentasulfid und nachträglicher Alkylierung.

Verbindungen der Formel (III) erhält man ebenfalls nach bekanntem Verfahren durch Umsetzen des Naphtholactams der Formel (V) beispielsweise mit Anilin in Gegenwart von Phosphoroxychlorid.

Man kann die Naphthostyrile der Formel (I) auch durch direkte Kondensation des Naphtholactams der Formel (V) mit dem Hydrazid der Formel (IV) in Gegenwart von Phosphoroxychlorid erhalten.

Als Beispiele von Naphtholactamen der Formel (V) seien genannt:

Naphtholactam-1,8
4-Chlor-naphtholactam-1,8
4-Brom-naphtholactam-1,8
2,4-Dichlor-naphtholactam-1,8
2,4-Dibrom-naphtholactam-1,8
4-Methoxy-naphtholactam-1,8
4-Methylmercapto-naphtholactam-1,8
4-Nitro-naphtholactam-1,8
4-Acetylamino-naphtholactam-1,8
2-Äthyl-naphtholactam-1,8
5-Phenylcarbamoyl-naphtholactam-1,8.

Als Beispiele von Hydraziden der Formel (IV) seien genannt die Hydrazide der Benzoesäuren

2-, 3- oder 4-Fluorbenzoesäure
2-, 3- oder 4-Chlorbenzoesäure
2-, 3- oder 4-Brombenzoesäure
3- oder 4-Methylbenzoesäure
3- oder 4-Methoxybenzoesäure
4-Nitro-1-benzoesäure
2,4- oder 3,4-Dichlorbenzoesäure
3,4-Dimethoxybenzoesäure
3,5-Dimethoxybenzoesäure
4-Diphenylcarbonsäure
3- oder 4-Acetamidobenzoesäure
3- oder 4-Benzoylamidobenzoesäure
4-Cyanbenzoesäure
4-Chlor-3-acetamidobenzoesäure.

Die erfindungsgemässen Pigmente können z.T. direkt als Rohprodukte verwendet werden. Falls erwünscht, kann man jedoch die Rohprodukte durch Mahlen oder Kneten in eine feindisperse Form überführen. Dabei werden zweckmässig Mahlhilfsmittel, wie anorganische und/oder organische Salze in Gegenwart oder

Abwesenheit organischer Lösungsmittel verwendet. Nach dem Mahlen werden Hilfsmittel wie üblich entfernt: lösliche anorganische Salze z. B. mit Wasser und wasserunlösliche organische Hilfsmittel beispielsweise durch Wasserdampfdestillation. Auch durch Behandeln der Rohpigmente mit organischen Lösungsmitteln, vorzugsweise solchen, die über 100°C sieden, kann, wenn erwünscht, oft eine Verbesserung der Eigenschaften erreicht werden. Als besonders geeignet erweisen sich durch Halogenatome, Alkyl- oder Nitrogruppen substituierte Benzole, wie Xylole, Chlorbenzol, o-Dichlorbenzol oder Nitrobenzol sowie Pyridin, Picolin oder Chinolin, ferner Ketone, wie Cyclohexanon, Äther, wie Aethylenglykolmonomethyl- oder -monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes im Wasser oder Lösungsmittel auf 100 bis 200°C, wobei in gewissen Fällen eine Kornvergröberung und gegebenenfalls eine Kristallmodifikationsumwandlung eintritt, was sich günstig auf die Licht- und Migrationsechtheit der erhaltenen Pigmente auswirkt.

Die erfindungsgemässen Pigmente eignen sich zum Pigmentieren von hochmolekularen Verbindungen, z. B. Celluloseäthern und -estern, wie Äthylcellulose, Acetylcellulose, Nitrocellulose, Polyamiden bzw. Polyurethanen oder Polyestern, natürlichen Harzen oder Kunstharzen, z. B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, die Pigmente als Toner oder in Form von Präparaten zu verwenden. Schliesslich können die neuen Pigmente auch als photoelektrophoretische Toner verwendet werden.

Zum Pigmentieren von Lacken und Druckfarben werden die hochmolekularen organischen Materialien und die Nickel- oder Kupferkomplexe der Verbindungen der Formel (I) gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die pigmentierten hochmolekularen organischen Materialien enthalten im allgemeinen Mengen von 0,001 bis 30 Gew.% des Nickel- oder Kupferkomplexes einer Verbindung der Formel (I), bezogen auf den zu pigmentierenden hochmolekularen organischen Stoff; dabei enthalten Polyplaste und Lacke vorzugsweise 0,1 bis 10 Gew.% Druckfarben, vorzugsweise 10-30 Gew.%. Die zu wählende Menge an Pigment richtet sich in erster Linie nach der gewünschten Farbstärke, ferner nach der Schichtdicke des Formlings und schliesslich gegebenenfalls auch nach dem Gehalt an Weisspigment im Polymeren.

Die erhaltenen Färbungen, beispielsweise in Kunststoffen, Fasern und Lacken, zeichnen sich durch sehr grosse Farbstärke, hohe Opazität, gute Dispergierbarkeit, gute Migrations- und Ueberlackierechtheiten, ausgezeichnete Licht- und Wasserechtheiten, guten Glanz, gute rheologische Eigenschaften und gutes IR-Remissionsverhalten aus.

## Beispiele

### Beispiel 1:

27,7 g (0,2 Mol) Benzhydrazid werden zu einer Lösung von 65,4 g (0,2 Mol) 2-Methylthio-benz-(c,d)-indolhydrojodid der Formel

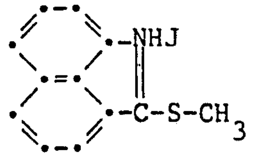

in 250 ml Pyridin zugefügt und unter Rühren auf 100-105°C erwärmt und 3 Stunden auf dieser Temperatur gehalten. Nach dem Erkalten wird mit 1500 ml kaltem Wasser verdünnt und filtriert. Man wäscht noch mit Methanol und heissem Wasser gut nach und trocknet im Vakuum bei 70-100°. Gegebenenfalls kann das erhaltene Produkt der Formel

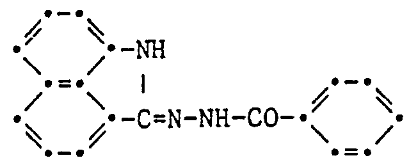

aus Dimethylformamid umkristallisiert werden und man erhält dann ein gelbes Kristallpulver. Smp. 264-266 °C korr.

| | | | | | |
|---|---|---|---|---|---|
| Analyse: | Ber. | C 75,25 % | H 4,56 % | N 14,63 % | O 5,57 % |
| | gef. | C 75,0 % | H 4,6 % | N 14,5 % | O 5,5 %. |

**Beispiel 2**:

Erhitzt man 12,2 g (0,05 Mol) des Anils der Formel

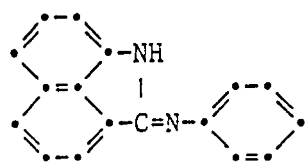

mit 6,8 g (0,05 Mol) Benzhydrazid in 100 ml Aethylenglykolmonoäthyläther und 5 ml Eisessig 3 Stunden lang unter Rühren auf 125°C, lässt dann erkalten und filtriert, wäscht mit Methanol und Wasser nach, so erhält man das gleiche Produkt wie nach Beispiel 1. Smp. 264-266° korr.

| | | | | | |
|---|---|---|---|---|---|
| Analyse | Ber.: | C 75,25 % | H 4,56 % | N 14,63 % | 0 5,57 % |
| | gef.: | C 75,3 % | H 4,7 % | N 14,9 % | 0 5,6 %. |

**Beispiel 3**:

Zu einem Gemisch von 16,9 g Naphthostyril und 13,9 g Benzhydrazid in 100 ml Chlorbenzol lässt man bei 60-65°C unter Rühren eine Mischung von 7,2 ml Phosphoroxychlorid und 2,8 ml Phosphortrichlorid zutropfen und hält diese Temperatur noch 4 Stunden lang. Dann lässt man erkalten, giesst das Gemisch auf Eis und Wasser, neutralisiert mit verdünnter Natronlauge bis auf einen pH von ca. 8 und treibt das Lösungsmittel mit Wasserdampf ab. Nach dem Erkalten wird das Produkt filtriert und gewaschen. Es kann nun in Methanol aufgeschlämmt und mit verdünnter Natronlauge gelöst werden. Die Lösung wird unter Zusatz von Kohle filtriert und mit Eisessig oder verdünnter Salzsäure wieder ausgefällt. Man erhält das gleiche Produkt wie in Beispiel 1. Smp. 264-266,2° korr.

**Beispiel 4**:

Zur Komplexbildung werden 4,0 g der gemäss Beispiel 1 erhaltenen Verbindung in 100 ml Aethylenglykolmonoäthyläther unter Zusatz von 1,91 g Ni-acetat.$4H_2O$ während 4 Stunden auf 127° (Rückfluss) unter Rühren erhitzt. Der ausgefallene Niederschlag wird heiss abfiltriert, mit Methanol und Wasser nachgewaschen und getrocknet. Man erhält ein dunkelrotes Pulver, das z. B. durch Mahlen in Isopropanol mit Hilfe von Mahlkörpern in feine Verteilung gebracht wird. Polyvinylchlorid wird damit in roten Tönen von guter Migrations- und Lichtechtheit gefärbt. Ein mit dem erhaltenen Nickelkomplex pigmentierter Lack zeigt sehr gute Licht- und Wetterbeständigkeit.

Anstelle des Aethylenglykolmonoäthyläthers kann ebensogut ein anderes Lösungsmittel wie z. B. Dimethylformamid, n-Butanol oder sogar Wasser, gegebenenfalls unter Zusatz von katalytischen Mengen Natronlauge oder Natriumacetat, verwendet werden.

| | | | | | |
|---|---|---|---|---|---|
| Analyse: | Ber.: | C 68,49 % | H 3,83 % | N 13,31 % | Ni 9,30 % |
| | gef.: | C 68,4 % | H 4,1 % | N 12,3 | % Ni 9,03 % |

In der nachfolgenden Tabelle (I) sind weitere Metallkomplexe aufgeführt, die man erhält durch Metallisierung gemäss Beispiel 4 des Naphthostyrils der Formel (I), worin X und Y H und A den in Kolonne 2 angegebenen Rest bedeuten.

**Tabelle I**

| Besp Nr. | A | Metall | Nuance | Analyse | | | | | |
|---|---|---|---|---|---|---|---|---|---|
| 5 | Phenyl | Cu | rotstichig-gelb | Ber.: | C 67,97 % | H 3,80 % | N 13,21 % | Cu 9,99 % | |
| | | | | Gef.: | 67,6 % | 3,9 % | 13,4 % | 10,3 % | |
| 6 | p-Chlorphenyl | Ni | orange | Ber.: | C 61,75 % | H 2,17 % | Cl 10,13 % | N 12,00 % | Ni 8,39 % |
| | | | | Gef.: | 62,1 % | 3,3 % | 9,8 % | 12,3 % | 8,25 % |
| 7 | p-Chlorphenyl | Cu | gelb | Ber.: | C 61,33 % | H 3,15 % | Cl 10,06 % | N 11,92 % | Cu 9,01 % |
| | | | | Gef.: | 60,9 % | 3,3 % | 9,8 % | 11,7 % | 9,01 % |
| 8 | p-Tolyl | Ni | rot | Ber.: | C 69,22 % | H 4,28 % | | N 12,75 % | Ni 8,90 % |
| | | | | Gef.: | 69,4 % | 4,2 % | | 12,9 % | 8,52 % |
| 9 | p-Tolyl | Cu | rotstichig gelb | Ber.: | C 68,71 % | H 4,25 % | | N 12,65 % | Cu 9,57 % |
| | | | | Gef.: | 68,8 % | 4,3 % | | 12,7 % | 9,49 % |
| 10 | 2,4-Dichlorphenyl | Ni | orange | Ber.: | C 56,22 % | H 2,62 % | Cl 18,44 % | N 10,93 % | Ni 7,63 % |
| | | | | Gef.: | 56,5 % | 2,5 % | 18,3 % | 11,3 % | 7,27 % |
| 11 | 2,4-Dichlorphenyl | Cu | gelb | Ber.: | C 55,87 % | H 2,60 % | Cl 18,32 % | N 10,86 % | Cu 8,21 % |
| | | | | Gef.: | 55,2 % | 2,7 % | 18,1 % | 10,62 % | 8,42 % |
| 12 | m-Tolyl | Ni | rot | Ber.: | C 69,22 % | H 4,28 % | | N 12,75 % | Ni 8,90 % |
| | | | | Gef.: | 69,0 % | 4,1 % | | 13,0 % | 8,97 % |
| 13 | m-Tolyl | Cu | rotstichig gelb | Ber.: | C 68,72 % | H 4,25 % | | N 12,65 % | Cu 9,57 % |
| | | | | Gef.: | 68,2 % | 4,1 % | | 12,6 % | 9,98 % |
| 14 | 2,4-Dichlorphenyl | Zn | gelb | Ber.: | C 55,74 % | H 2,60 % | Cl 18,28 % | N 10,83 % | Zn 8,43 % |
| | | | | Gef.: | 55,4 % | 2,8 % | 17,8 % | 10,6 % | 8,23 % |
| 15 | 3,4-Dichlorphenyl | Ni | orange | Ber.: | C 56,22 % | H 2,62 % | Cl 18,44 % | N 10,93 % | Ni 7,63 % |
| | | | | Gef.: | 56,6 % | 2,8 % | 18,0 % | 10,9 % | 7,43 % |
| 16 | β-Naphthyl | Ni- | rot | Ber.: | C 72,25 % | H 3,86 % | | N 11,49 % | Ni 8,03 % |
| | | | | Gef.: | 72,2 % | 4,0 % | | 11,5 % | 7,86 % |
| 17 | β-Naphthyl | Cu | orange | Ber.: | C 71,78 % | H 3,83 % | | N 11,41 % | Cu 8,63 % |
| | | | | Gef.: | 71,1 % | 3,9 % | | 12,0 % | 8,5 % |
| 18 | 2-Thienyl | Ni | rot | Ber.: | C 59,74 % | H 3,13 % | N 13,06 % | S 9,97 % | Ni 9,13 % |
| | | | | Gef.: | 59,8 % | 3,1 % | 13,1 % | 10,0 % | 9,12 % |
| 19 | 2-Thienyl | Cu | gelborange | Ber.: | C 59,29 % | H 3,11 % | N 12,97 % | S 9,89 % | Cu 9,80 % |
| | | | | Gef.: | 59,0 % | 3,1 % | 12,9 % | 9,5 % | 9,88 % |

**Tabelle 1** (Fortsetzung)

| Bsp. Nr. | A | Metall | Nuance | Analyse | | | | | |
|---|---|---|---|---|---|---|---|---|---|
| 20 | 3-Flourphenyl | Ni | orange | Ber.: | C 64,8 % | H 3,3 % | F 5,7 % | Ni 12,6 % | Ni 8,85 % |
| | | | | Gef.: | 64,7 % | 3,3 % | 5,8 % | 12,4 % | 8,69 % |
| 21 | 3-Flourphenyl | Cu | gelb | Ber.: | C 64,33 % | H 3,30 % | F 5,65 % | N 12,50 % | Cu 9,45 % |
| | | | | Gef.: | 64,0 % | 3,7 % | 5,7 % | 12,9 % | 9,41 % |
| 22 | 4-Bromphenyl | Ni | orange | Ber.: | C 54,79 % | H 2,81 % | Br 20,25 % | N 10,65 % | Ni 7,44 % |
| | | | | Gef.: | 54,9 % | 2,8 % | 20,4 % | 10,6 % | 7,32 % |
| 23 | 4-Bromphenyl | Cu | gelb | Ber.: | C 54,46 % | H 2,79 % | Br 20,13 % | N 10,59 % | Cu 8,00 % |
| | | | | | 54,3 % | 3,0 % | 20,1 % | 10,9 % | 8,01 % |
| 24 | 4-Methoxyphenyl | Ni | rot | Ber.: | C 66,01 % | H 4,08 % | | N 12,16 % | Ni 8,49 % |
| | | | | Gef.: | 65,5 % | 4,2 % | | 12,3 % | 8,56 % |
| 25 | 4-Methoxyphenyl | Cu | rotstichig gelb | Ber.: | C 65,56 % | H 4,05 % | | N 12,07 % | Cu 9,13 % |
| | | | | Gef.: | 65,0 % | 4,3 % | | 12,2 % | 9,36 % |
| 26 | o-Tolyl | Ni | rotabraun | Ber.: | C 69,22 % | H 4,28 % | | N 12,75 % | Ni 8,90 % |
| | | | | Gef.: | 69,1 % | 4,2 % | | 13,0 % | 8,88 % |
| 27 | o-Tolyl | Cu | gelbraun | Ber.: | C 68,71 % | H 4,25 % | | N 12,65 % | Cu 9,57 % |
| | | | | Gef.: | 67,4 % | 4,3 % | | 12,6 % | 10,4 % |
| 28 | 3-Amino-4-chlor-phenyl | Ni | orange | Ber.: | C 59,4 % | H 3,3 % | Cl 9,7 % | N 15,4 % | Ni 8,0 % |
| | | | | Gef.: | 59,4 % | 3,3 % | 9,6 % | 15,6 % | 7,89 % |
| 29 | 3-Amino-4-chlor-phenyl | Cu | rotsichig gelb | Ber.: | C 59,0 % | H 3,3 % | Cl 9,7 % | N 15,3 % | Cu 8,6 % |
| | | | | Gef.: | 58,5 % | 3,6 % | 9,5 % | 15,4 % | 8,5 % |
| 30 | 3-Acetylamino-phenyl | Ni | gelbsti-chig rot | Ber.: | C 64,63 % | H 3,80 % | | N 15,07 % | Ni 7,90 % |
| | | | | Gef.: | 64,2 % | 4,2 % | | 15,1 % | 7,80 % |
| 31 | 3-Acetylaminophenyl | Cu | rotstichig gelb | Ber.: | C 64,21 % | H 3,77 % | | N 14,98 % | Cu 8,49 % |
| | | | | Gef.: | 63,9 % | 4,4 % | | 14,9 % | 8,47 % |
| 32 | 4-Benzoylaminophenyl | Ni | rot | Ber.: | C 69,06 % | H 3,34 % | | N 12,89 % | Ni 6,75 % |
| | | | | Gef.: | 68,7 % | 4,1 % | | 12,8 % | 6,61 % |
| 33 | 4-Benzoylaminophenyl | Cu | rotstichig gelb | Ber.: | C 68,68 % | H 3,92 % | | N 12,82 % | Cu 7,27 % |
| | | | | Gef.: | 68,4 % | 4,2 % | | 12,9 % | 7,31 % |
| 34 | 4-Cyanphenyl | Ni | blaustichig rot | Ber.: | C 66,99 % | H 3,25 % | | N 16,45 % | Ni 8,62 % |
| | | | | Gef.: | 66,6 % | 3,7 % | | 16,4 % | 8,51 % |
| 35 | 4-Cyanphenyl | Cu | orange | Ber.: | C 66,52 % | H 3,23 % | | N 16,33 % | Cu 9,26 % |
| | | | | Gef.: | 65,9 % | 3,2 % | | 16,1 % | 9,47 % |
| 36 | 4-Pyridinyl | Cu | rotstichig gelb | Ber.: | C 63,29 % | H 4,53 % | | N 17,37 % | Cu 9,85 % |
| | | | | Gef.: | 63,8 % | 4,0 % | | 17,4 % | 9,95 % |
| 37 | 3,4-Dichlorphenyl | Cu | rotstichig gelb | Ber.: | C 55,87 % | H 2,60 % | Cl 18,32 % | N 10,86 % | Cu 8,21 % |
| | | | | Gef.: | 55,4 % | 2,7 % | 17,5 % | 11,1 % | 8,17 % |

**Beispiele 38-40**

In der nachfolgenden Tabelle 2 sind weitere Metallkomplexe aufgeführt, die man erhält durch Metallisierung gemäss Beispiel 4 des Naphthostyrils der Formel (I), worin A, X und Y die in den Kolonnen 2-4 angegebenen Reste bedeuten.

**Tabelle 2**

| Bsp. Nr. | A | X | Y | Metall | Nuance | Analyse | | | | | |
|---|---|---|---|---|---|---|---|---|---|---|---|
| 38 | p-Clorphenyl | H | 4-Cl | Ni | orange | Ber.: | C 56,22 % | H 2,62 % | Cl 18,44 % | N 10,93 % | Ni 7,63 % |
| | | | | | | Gef.: | 55,9 % | 2,8 % | 18,1 % | 11,1 % | 7,49 % |
| 39 | p-Clorphenyl | H | 4-Cl | Cu | rotstichig gelb | Ber.: | C 55,87 % | H 2,60 % | Cl 18,32 % | N 10,86 % | Cu 8,21 % |
| | | | | | | Gef.: | 55,2 % | 2,8 % | 17,9 % | 10,9 % | 8,13 % |
| 40 | p-Chlorphenyl | 5-$COOCH_3$ | H | Ni | violett | Ber.: | C 58,86 % | H 3,21 % | Cl 8,69 % | N 10,30 % | Ni 7,19 % |
| | | | | | | Gef.: | 58,6 % | 3,3 % | 8,6 % | 10,3 % | 7,16 % |

**Beispiel 41**:

65 g Polyvinylchlorid-Pulver (Suspensionspolymerisat), 33 g Dioctylphthalat, 2 g Dibutylzinnlaurat, 0,3 g eines Stabilisators auf Phosphatbasis und 0,7 g des nach Beispiel 4 hergestellten Pigmentes werden vermischt und auf dem 160° C heissen Mischwalzwerk während 15 Minuten verarbeitet. Anschliessend wird auf dem Kalander eine Folie von 0,4 mm Dicke hergestellt. Die erhaltene rote Färbung ist hitzebeständig, licht-, wetter- und migrationsecht.

**Beispiel 42**:

0,2 g des nach Beispiel 4 hergestellten Pigments, 1 g Titandioxyd (Rutil) und 100 g LD-Polyäthylengranulat werden in einer Trommel gemischt und das Gemisch anschliessend auf dem Mischwalzwerk bei 130 verarbeitet. Die Masse wird heiss zu Platten verpresst oder in der Strangpresse verformt. Die erhaltenen roten Platten zeigen eine ausgezeichnete Licht- und Wetterechtheit.

**Beispiel 43**:

0,1 g des nach Beispiel 4 hergestellten Pigmentes, 0,5 g Titandioxyd (Rutil) und 100 g Polypropylengranulat werden in einer Trommel gemischt und das Gemisch anschliessend auf dem Mischwalzwerk bei 190 C verarbeitet, bis eine homogene gefärbte Mischung vorliegt. Die Masse wird heiss zu Platten von 1 mm verpresst. Die erhaltenen roten Platten zeigen eine gute Licht- und Wetterechtheit.

**Beispiel 44**:

100 g stabilisiertes Polyvinylchlorid werden mit 1 g eines durch Salzknetung von 0,5 g Pigment mit 0,5 g eines Kopolymerisats aus 85 Gew.% Polyvinylchlorid und 15 Gew.% Polyvinylacetat erhaltenen Präparates gemischt und 6 Minuten bei 190° C gewalzt. Das Walzgut wird manuell bewegt, bis eine gute Pigmentverteilung erzielt wird. Die Masse wird nun unter Druck bei 190-200° C in der Form wieder abgekühlt. Die auf diese Weise eingefärbten roten Platten zeichnen sich durch eine hohe Licht- und Wetterechtheit aus.

In der gleichen Weise können aufgehellte wetterechte rote Färbungen in Hart-PVC erzeugt werden, wenn dem Ansatz bei gleichem oder reduziertem Buntpigmentanteil zusätzlich Titandioxyd zugefügt wird.

**Beispiel 45**:

10 g Titandioxyd und 2 g des nach Beispiel 4 hergestellten Pigments werden mit 88 g einer Mischung von 26,4 g Kokosalkydharz, 24,0 g Melamin-Formaldehydharz (50 % Festkörpergehalt), 8,8 g Aethylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120° C eingebrannt, dann erhält man eine Rotlackierung, die sich bei guter Farbstärke durch eine sehr gute Ueberlackier-, Licht- und Wetterechtheit auszeichnet.

**Patentansprüche**

1. 1:2-Nickel- oder 1:2-Kupferkomplexe eines Naphthostyrils der Formel

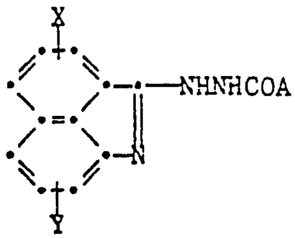

(I),

oder von Tautomeren davon, worin A einen carbocyclischen oder heterocyclischen aromatischen Rest, X und Y unabhängig voneinander Wasserstoff, Halogen, Nitro, $C_1$-$C_6$-Alkyl, $C_1$-$C_6$-Alkoxy oder Alkylmercapto, $C_2$-$C_7$-Alkoxycarbonyl, Carbamoyl, $C_2$-$C_7$-Alkylcarbamoyl, Arylcarbamoyl, $C_2$-$C_6$-Alkanoylamino oder Aroylamino bedeuten.

2. 1:2-Nickel- oder 1:2-Kupferkomplexe eines Naphthostyrils gemäss Anspruch 1 der Formel I, worin A einen gegebenenfalls durch Chlor, Brom, Fluor, Methyl-, Phenyl-, $C_1$-$C_6$-Alkoxy-, Phenoxy-, $C_2$-$C_7$-Alkoxycarbonyl-, Carbamoyl-, $C_2$-$C_7$-Alkylcarbamoyl-, $C_2$-$C_{13}$-Dialkylamino-oder Phenylcarbamoylgruppen substituierten Phenylrest oder einen Naphthylrest bedeutet.

3. 1:2-Nickel- oder 1:2-Kupferkomplexe eines Naphthostyrils gemäss Anspruch 1 der Formel I, worin A einen Thiophen- oder Pyridinrest bedeutet.

4. 1:2-Nickel- oder 1:2-Kupferkomplexe eines Naphthostyrils gemäss Anspruch 1 der Formel I, worin X und Y H-Atome bedeuten.

5. Verfahren zur Herstellung von 1:2-Nickel- oder 1:2-Kupferkomplexen eines Naphthostyrils der Formel I gemäss Anspruch 1, dadurch gekennzeichnet, dass man eine Verbindung der Formel

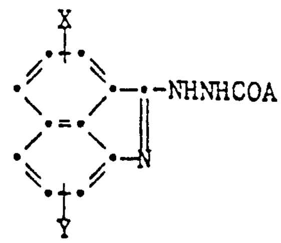

(I),

oder eines Tautomeren davon worin A, X und Y die in Anspruch 1 angegebene Bedeutung haben, mit nickel- oder kupferabgebenden Mitteln behandelt.

6. Verfahren gemäss Anspruch 5, dadurch gekennzeichnet, dass man von einer Verbindung der Formel I ausgeht, worin A einen gegebenenfalls durch Chlor, Brom, Fluor, Methyl-, Phenyl- , $C_1$-$C_6$-Alkoxy-, Phenoxy-, $C_2$-$C_7$-Alkoxycarbonyl-, Carbamoyl-, $C_2$-$C_7$-Alkylcarbamoyl-, $C_2$-$C_{13}$-Dialkylamino oder Phenylcarbamoylgruppen substituierten Phenylrest oder einen Naphthylrest bedeutet.

7. Verfahren gemäss Anspruch 5, dadurch gekennzeichnet, dass man von einer Verbindung der Formel I ausgeht, worin A einen Thiophen- oder Pyridinrest bedeutet.

8. Verfahren gemäss Anspruch 5, dadurch gekennzeichnet, dass man von einer Verbindung der Formel I ausgeht, worin X und Y H-Atome bedeuten.

9. Verfahren zum Pigmentieren von hochmolekularem organischem Material, gekennzeichnet durch die Verwendung eines Metallkomplexes gemäss Anspruch 1.

10. Hochmolekulares organisches Material, enthaltend einen Metallkomplex gemäss Anspruch 1.

**Claims**

1. A 1:2 nickel or 1:2 copper complex of a naphthostyril of the formula

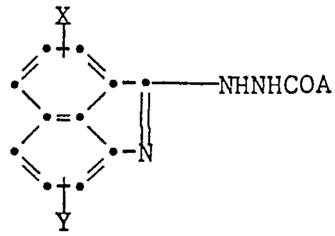

(I),

or of a tautomer thereof, in which A is a carbocyclic or heterocyclic aromatic radical, and X and Y independently of each other are hydrogen, halogen, nitro, $C_1$-$C_6$-alkyl, $C_1$-$C_6$-alkoxy or alkylmercapto, $C_2$-$C_7$-alkoxycarbonyl, carbamoyl, $C_2$-$C_7$-alkylcarbamoyl, arylcarbamoyl, $C_2$-$C_6$-alkanoylamino or aroylamino.

2. A 1:2 nickel or 1:2 copper complex of a naphthostyril according to claim 1 of formula I, in which A is a phenyl radical which is unsubstituted or substituted by chlorine, bromine or fluorine or methyl, phenyl, $C_1$-$C_6$-alkoxy, phenoxy, $C_2$-$C_7$-alkoxycarbonyl, carbamoyl, $C_2$-$C_7$-alkylcarbamoyl, $C_2$-$C_{13}$-dialkylamino or phenylcarbamoyl groups, or a naphthyl radical.

3. A 1:2 nickel or 1:2 copper complex of a naphthostyril according to claim 1 of formula I, in which A is a thiophene or pyridine radical.

4. A 1:2 nickel or 1:2 copper complex of a naphthostyril according to claim 7 of formula I, in which X and Y are H atoms.

5. A process for the preparation of a 1 :2 nickel or 1 :2 copper complex of a naphthostyril of formula I according to claim 1, which process comprises treating a compound of the formula

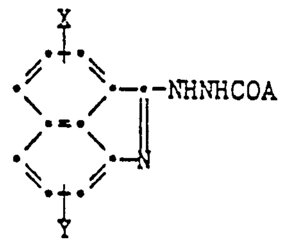

(I),

or a tautomer thereof, in which A, X and Y are as defined in claim 1, with nickel donors or copper donors.

6. A process according to claim 5, which comprises starting from a compound of formula I, in which A is a phenyl radical which is unsubstituted or substituted by chlorine, bromine or fluorine or methyl, phenyl, $C_1$-$C_6$-alkoxy, phenoxy $C_2$-$C_7$-alkoxycarbonyl, carbamoyl, $C_2$-$C_7$-alkylcarbamoyl, $C_2$-$C_{13}$-dialkylamino or phenylcarbamoyl groups, or a naphthyl radical.

7. A process according to claim 5, which comprises starting from a compound of formula I, in which A is a thiophene or pyridine radical.

8. A process according to claim 5, which comprises starting from a compound of formula I, in which X and Y are hydrogen atoms.

9. A process for pigmenting high molecular weight organic material, which comprises using a metal complex defined in claim 1.

10. High molecular weight organic material which contains a metal complex defined in claim 1.

## Revendications

1. Complexes de nickel 1:2 ou de cuivre 1:2 d'un naphtostyrile répondant à la formule I:

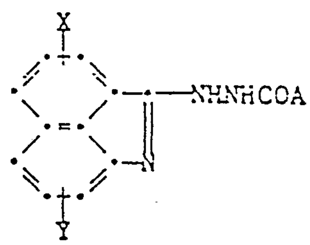

(I)

(ou de tautomères d'un tel naphtostyrile), formule dans laquelle A représente un radical aromatique carbocyclique ou hétérocyclique, et X et Y représentent chacun, indépendamment l'un de l'autre, l'hydrogène, un halogène, le radical nitro, un alkyle en $C_1$-$C_6$, un alcoxy en $C_1$-$C_6$, un alkylthio en $C_1$-$C_6$, un alcoxycarbonyle en $C_2$-$C_7$, le radical carbamoyle, un alkylcarbamoyle en $C_2$-$C_7$, un arylcarbamoyle, un alcanoylamino en $C_2$-$C_6$ ou

un aroylamino.

2. Complexes de nickel 1:2 ou de cuivre 1:2 d'un naphtostyrile de formule I selon la revendication 1 dans lequel A représente un radical phényle éventuellement porteur d'un atome de chlore, de brome ou de fluor ou d'un radical méthyle, phényle, alcoxy en $C_1$-$C_6$, phénoxy, alcoxycarbonyle en $C_2$-$C_7$, carbamoyle, alkylcarbamoyle en $C_2$-$C_7$, dialkylamino en $C_2$-$C_{13}$ ou phénylcarbamoyle, ou un radical naphtyle.

3. Complexes de nickel 1:2 ou de cuivre 1:2 d'un naphtostyrile de formule I selon la revendication 1 dans lequel A représente un radical de thiophène ou un radical de pyridine.

4. Complexes de nickel 1:2 ou de cuivre 1:2 d'un naphtostyrile de formule I selon la revendication 1 dans lequel X et Y représentent chacun un atome d'hydrogène.

5. Procédé de préparation de complexes de nickel 1:2 ou de cuivre 1:2 d'un naphtostyrile de formule I selon la revendication 1, procédé caractérisé en ce qu'on traite un composé répondant à la formule I:

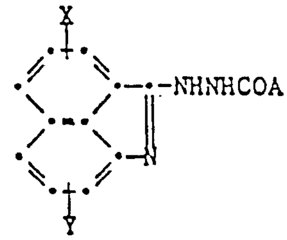

(I)

dans laquelle A, X et Y ont les significations données à la revendication 1, ou un tautomère d'un tel composé, par des agents cédant du nickel ou du cuivre.

6. Procédé selon la revendication 5 caractérisé en ce qu'on part d'un composé de formule I dans lequel A représente un radical phényle éventuellement porteur d'un atome de chlore, de brome ou de fluor ou d'un radical méthyle, phényle, alcoxy en $C_1$-$C_6$, phénoxy, alcoxycarbonyle en $C_2$-$C_7$, carbamoyle, alkylcarbamoyle en $C_2$-$C_7$, dialkylamino en $C_2$-$C_{13}$ ou phénylcarbamoyle, ou un radical naphtyle.

7. Procédé selon la revendication 5 caractérisé en ce qu'on part d'un composé de formule I dans lequel A représente un radical de thiophène ou un radical de pyridine.

8. Procédé selon la revendication 5 caractérisé en ce qu'on part d'un composé de formule I dans lequel X et Y représentent chacun un atome d'hydrogène.

9. Procédé pour pigmenter des matières organiques à haut poids moléculaire, procédé caractérisé en ce qu'on utilise un complexe métallisé selon la revendication 1.

10. Matières organiques à haut poids moléculaire qui contiennent un complexe métallisé selon la revendication 1.